# EUROPEAN PATENT APPLICATION

(11) **EP 1 080 621 A1**
(43) Date of publication of application: **07.03.2001**
(21) Application number: 00307477.0
(22) Date of filing: 31.08.2000
(51) Int. Cl.: A01B 51/02, B62D 49/06

(54) **Universal tool carrier**

(30) Priority: 31.08.1999 GB 9920509
(71) Applicant: REEKIE MANUFACTURING LTD., Forfar, Angus DD8 1UQ (GB)
(72) Inventor: Sanderson, Jeffrey John, By Forfar, Angus DD8 3PX (GB); Wood, Peter James, Forfar, Angus DD8 1LN (GB)
(74) Representative: Szczuka, Jan Tymoteusz

(57) **Abstract**

The present invention provides a self-propelled universal tool carrier comprising: a chassis 1 for carrying at least one agricultural tool mounted on a front pair of wheels 2,3 and a rear pair of wheels 4,5 and provided with propulsion means 7 for driving the chassis forward on said wheels 2-5. The front pair of wheels of wheels is mounted on a front wheel mounting support 10 extending from a front portion 12 of the chassis 1 and hinged 11 to the chassis 1 such that the front pair 2,3 is displaceable laterally to each side of a position in alignment with the longitudinal axis X of the chassis 1. The front wheel mounting support 10 is formed and arranged for mounting of said front pair of wheels 2,3 so that they can be maintained parallel to the longitudinal axis X of the chassis 1 when said front wheel mounting support 10 is laterally displaced. The two front wheels 2,3 are disposed on opposite sides of a longitudinal axis of the front wheel mounting support 10.

## Description

The present invention relates to self-propelled agricultural machines and, more specifically, to a new apparatus which we refer to as a "Universal Tool Carrier".

Previously known self-propelled agricultural machines generally incorporate a chassis mounted on two pairs of wheels, one pair of wheels towards the rear of the chassis and one pair towards the front of the chassis. A problem with this design is that where the machinery is traversing terrain containing a crop which is, for example, to be harvested, at least one of the front wheels will normally be running over the crop itself, which leads to undesirable damage to the crop before it is even lifted out of the ground. Particularly in the case of root potatoes and other tubers, any damage at all to the tubers is highly undesirable since as well as the harvested crop containing tubers which have been so damaged, the damaged tubers are susceptible to disease and will quickly cause other good tubers stored therewith to become diseased and bad, leading to further reduction in yield for the farmer and lost profits for bulk buyers and sellers alike.

EP-A1-0 469 229 describes a self-propelled agricultural machine having a single front steering wheel which pivots at the end of a draw bar hinging on a vertical axis located towards the front of the machine's chassis. This machine is commonly used as an agricultural harvester for harvesting potatoes and the like. The hinged draw bar enables the single wheel to be displaced to the left or right of a vertical plane containing one side of the chassis. Although adequate for traversing flat land, such a chassis design is unlikely to be as suitable for traversing more undulating or inclined territory, for example traversing the side of a hill. In such situations, two wheels at the front of the machine are desirable to provide maximum stability, particularly in situations where the crop is being harvested from hard (i.e. compacted) terrain, where substantial force is required to be exerted by the harvester shares to lift the crop out of the ground.

FR 2,073,945 also shows a harvester with a single front wheel provided towards the front of the harvester, the single wheel being pivotally mounted on an auxiliary chassis which is hinged on a vertical axis to one side of a main chassis of the harvester. The arrangement allows for relatively small movement of the wheel towards or away from that side of the chassis, the mid position of the auxiliary chassis being such that the wheel can be aligned with one of the rear wheels of the chassis. Again, by only providing a single front wheel provided to one side of the chassis the machine does not provide maximum stability for use in traversing inclined or undulating terrain. Moreover the range of positions of the single wheel of this machine is relatively limited.

A further disadvantage of the above harvester designs is that they are not suitable for incorporating equipment for carrying out other operations such as stone separating, ground cultivating, or planting, where the ground to be operated on can be very hard. For example, if the chassis design of FR 2,073,945, or EP-A1-o 469 229, was used for carrying a stone separator, due to the three-wheeled design there would not be equal traction on both sides of the vehicle which would be likely to be unstable in use, especially where the ground to be stone-separated is very hard.

It is an object of the present invention to avoid or minimise one or more of the foregoing disadvantages.

Accordingly, the present invention provides a self-propelled universal tool carrier comprising: a chassis for carrying at least one agricultural tool; two pairs of wheels, namely a front pair and a rear pair, on which the chassis is mounted; and propulsion means for driving the chassis forward on said wheels, wherein the front pair of wheels is mounted on a front wheel mounting support extending from a front portion of the chassis and hinged to the chassis such that the front pair of wheels is displaceable laterally to each side of a longitudinal axis of the chassis, and the front wheel mounting support is also alignable with said longitudinal axis of the chassis, the front wheel mounting support being formed and arranged so as to enable said front pair of wheels to be maintained parallel to the longitudinal axis of the chassis notwithstanding the position of the front wheel mounting support, and wherein the two front wheels are disposed on opposite sides of a longitudinal axis of the front wheel mounting support, and wherein, preferably, the track width between the two front wheels is adjustable.

One advantage of the above-mentioned machine is that the two front wheels can be displaced to either side of the chassis, depending on the direction in which the machine is moving over a field in which a crop is being lifted (or is being planted), so as to prevent the front wheels from traversing the crop itself. This provides good flexibility which enables the machine to be used in many different situations. Moreover, by having two front wheels greater stability of the chassis can be achieved than for a single front wheel structure.

A further advantage is that, by setting the track width between the front wheels to a relatively broad spacing (which may be the maximum track width of the front wheels), and adjusting the position of the front wheel mounting support so that it is aligned with the longitudinal axis of the chassis, good stability of the universal tool carrier (UTC) can be achieved, with equal traction on both sides of the chassis. This means that the UTC, set in this configuration, is particularly well suited for carrying stone separating and/or planting apparatus, or equipment for any other operations to be carried out in hard ground or where maximum stability and/or balanced traction will be especially required.

Preferably, said front wheel mounting support comprises an elongate beam extending from a front portion of the chassis and hinged on a substantially vertical axis which intersects the longitudinal axis of the chassis, such that the elongate beam is pivotable relative to the longitudinal axis of the chassis and is alignable with the longitudinal axis of the chassis. The front wheel mounting support preferably further includes pivotable mounting means via which the front pair of wheels are pivotally mounted to the hinged elongate beam so as to enable said front pair of wheels to be maintained parallel to the longitudinal axis of the chassis notwithstanding the position of the hinged elongate beam, the two front wheels being disposed on opposite sides of the elongate beam.

The track width of the front wheels can preferably be set to equal the track width of the rear wheels. This is particularly desirable for when the machine is to be driven on public roads, since this arrangement of the wheels provides maximum stability of the machine. The ability to align the elongate beam with the longitudinal axis of the chassis, and to vary the track width of the front wheels, means that the chassis can be readily designed to meet mandatory width requirements for on-road vehicles which are set by the appropriate national and/or international bodies in the country or countries in which the vehicle will be used, but can exceed these width requirements when the front wheels are in a laterally displaced position.

The rear pair of wheels may have a fixed track width. Alternatively, and preferably, the rear wheels have adjustable track width. Preferably, the track width between the two front wheels can be set to any desired track width between a minimum track width and a maximum track width. The track width of the two rear wheels can preferably also be adjusted to any desired width between a minimum and a maximum track width. The range of possible track widths of the front and rear wheels need not be the same, although preferably the ranges overlap. In one possible embodiment the front wheels may be thinner than the rear wheels and the track width of the front wheels may be set so that the outer faces of the front wheels are aligned with the outer faces of the rear wheels.

The ability to set the two front wheels at a smaller track width when the front wheels are displaced to either side of the chassis means that maximum stability of the chassis can be achieved when the front wheels are being used in this displaced condition. (It will be appreciated that in order to obtain maximum stability when the front wheels are displaced to one side of the chassis, it is desirable to have both wheels located as close as possible to the centre of gravity of the chassis).

The two front wheels are preferably mounted, in parallel relationship, to a free end of the hinged beam via said pivotable mounting means which is preferably in the form of a single mounting means which is pivotally connected to the free end of the hinged beam. In this manner, the two front wheels are together, and maintained in parallel, when the single mounting means is pivoted at the free end of the hinged beam. Thus, the front wheels can be brought back into parallel relationship with the rear wheels, once the hinged beam has been rotated to a new position.

At least one, preferably each, of the two front wheels may advantageously be mounted on a respective extensible arm means forming part of said single mounting means. The or each said extensible arm means may, for example, be in the form of a telescopic arm. Each arm may be extensible (preferably independently extensible) to any position between a fully contracted state and a fully extended state. The rear wheels are preferably also mounted on respective extensible arm means.

The UTC preferably further includes control means for setting the hinged elongate beam in any desired position between (and including) two extreme positions in which the front pair of wheels are at their maximum lateral displacement to either side of the longitudinal axis of the chassis. The control means may conveniently comprise hydraulic means, for example electrically controlled hydraulic piston and cylinder means, for setting the hinged beam at a desired angle relative to the longitudinal axis of the chassis. Alternatively, mechanical locking means could be provided for locking the hinged beam in a desired position.

The UTC as above-described may incorporate harvesting machinery suitable for harvesting tubers e.g. potatoes. In this case the chassis of the UTC will carry a plurality of harvesting shares located at the front of the chassis and which will be pushed through the ground by the self-propelled chassis in use thereof. The UTC may additionally carry stone (and/or tuber) separating machinery and/or grading machinery mounted to the chassis, or otherwise incorporated therein. Additionally, or alternatively, the UTC may carry other types of agricultural tools e.g. cultivating equipment for breaking up soil, planting equipment for planting tubers, and/or spraying equipment.

A preferred embodiment of the invention will now be described, by way of example only, and with reference to the accompanying drawings in which:
Fig. 1 is a side elevation of a self-propelled Universal Tool Carrier (UTC) according to the invention;
Fig. 2 is a plan view of the UTC of Fig. 1, showing a pair of front wheels displaced laterally of a longitudinal axis of the UTC chassis;
Fig. 3 is a plan view of the UTC of Fig. 1, showing a pair of front wheels aligned with a pair of rear wheels of the UTC;
Fig. 4a is a front view showing the relative positions of a driver's cab and the front wheel arrangement of the UTC of Fig. 2;
Fig. 4b is a front view showing the relative arrangement of a driver's cab and the front wheel arrangement of the UTC of Fig. 3;
Fig. 5 is a side elevation of the UTC of Fig.1, incorporating harvesting equipment;
Fig. 6a is a front view of the harvester UTC of Fig. 5, showing a front pair of wheels in a first position in which they are aligned with a rear pair of wheels; and
Fig. 6b is a front view of the harvester UTC of Fig. 5, showing the front pair of wheels displaced laterally from the longitudinal axis of the UTC chassis.

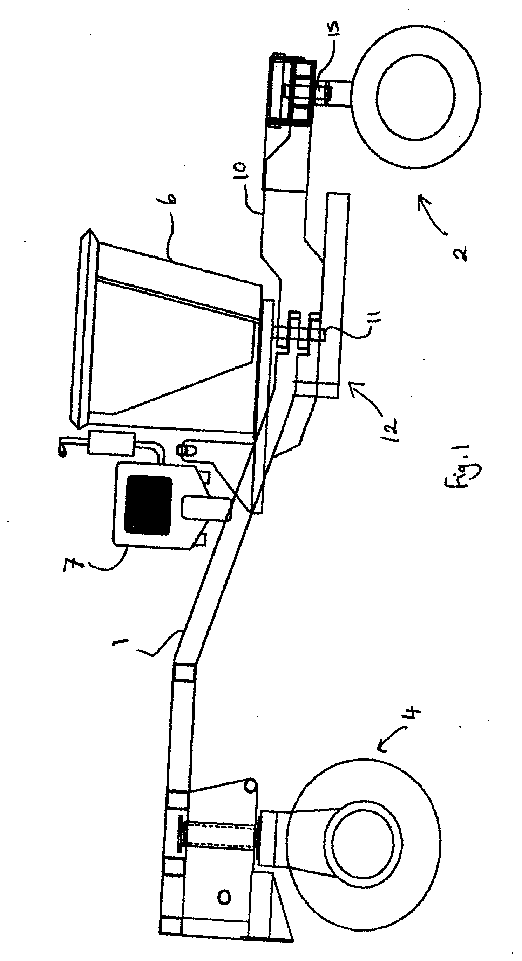

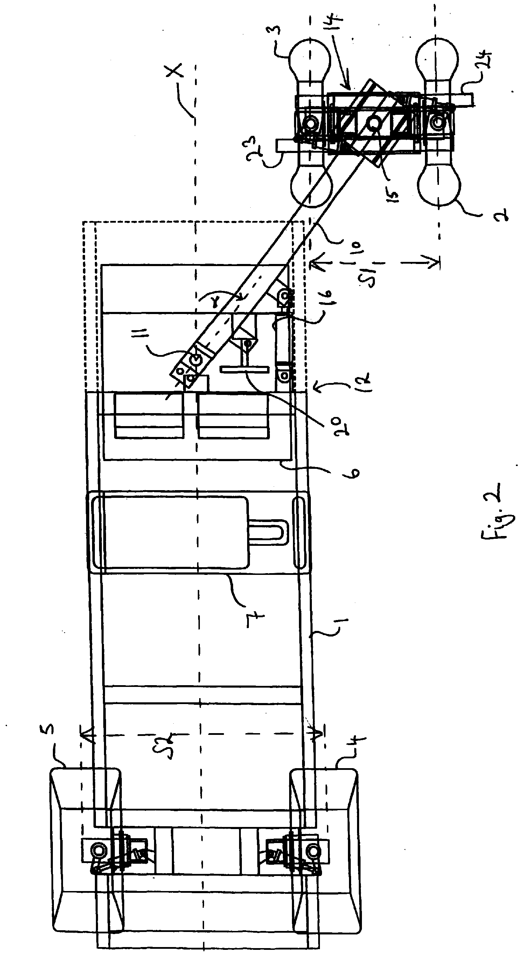

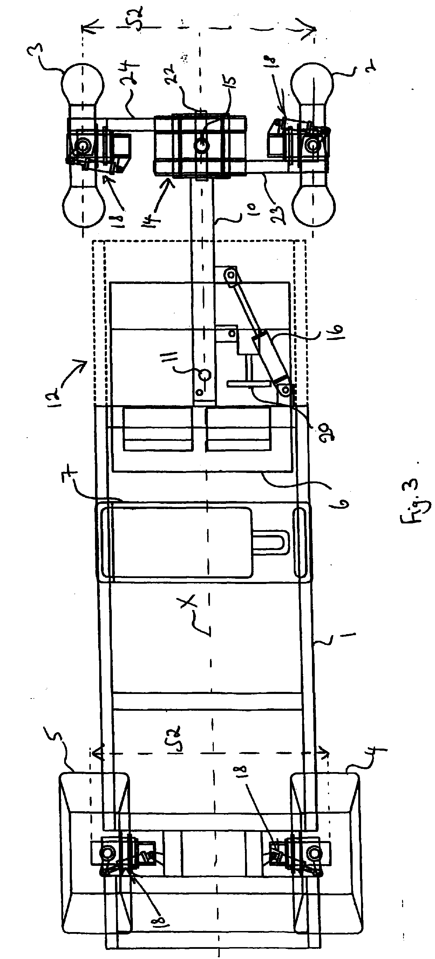

Fig. 1 shows a self-propelled universal tool carrier (UTC) comprising a chassis 1 mounted on a front pair of wheels 2, 3 and a rear pair of wheels 4, 5. A driver's cab 6, and an engine 7 for propelling the chassis 1 forward on its wheels, are mounted on the chassis. As can be seen most clearly from Figs. 2 & 3, showing plan views of the machine of Fig. 1, there is an elongate beam 10 which is hingedley connected to a front portion 12 of the chassis 1 via a vertical hinge pin 11. The vertical hinge pin 11 is perpendicular to, and intersects, the longitudinal axis X of the chassis, as shown in Fig.2. The front pair of wheels 2, 3 are carried on a mounting arrangement 14 which is pivotally connected to the free end of the elongate beam 10, via a pivot pin 15. Hydraulic ram 16 is provided for controlling the position of the elongate beam 10. The hydraulic ram 16 may be controlled via a control panel (not shown) accessible to the driver in the driver's cab 6. Alternatively, there may be a control panel or switch located elsewhere on the UTC for controlling the ram 16. The driver may thus control the hydraulic ram 16 so as to extend or retract the ram (which is pivotally connected at each end to the chassis 1 and elongate beam 10 respectively), so as to swing the elongate beam, carrying the front pair of wheels, either to the left or the right of a central or longitudinal axis X of the chassis. The elongate beam 10 can, by virtue of the hydraulic ram 16, be set so that the front pair of wheels 2,3 are laterally displaced with respect to the longitudinal axis X by up to a maximum angle of displacement to the left or right of the longitudinal axis X (see Figs. 2 & 3). Fig. 2 shows the elongate beam 10 displaced to its maximum angle • to the right of the longitudinal axis X, while Fig. 3 shows the elongate beam 10 aligned with the longitudinal axis X. By extending the hydraulic ram 16 even further than in Fig. 3 it will be appreciated that the elongate beam can be swung in the other direction so as to displace the front pair of wheels 2, 3 to the left of the longitudinal axis X. The hydraulic ram 16 is designed so as to enable the elongate beam 10 to be displaced by up to substantially equal maximum amounts to the left and right of the longitudinal axis X.

Each of the four wheels 2,3,4,5 are oil-driven by means of a hydraulic pump driving each wheel axle in conventional manner. A hydraulic steering ram 18 is provided for each wheel (see Fig.3). The height of each of the two rear wheels 4,5 (relative to the chassis 1) is also adjustable by means of further hydraulic rams (not shown). A steering wheel 20 provided in the driver's cab 6 enables a driver to control the direction in which the two front wheels 2,3 (which are mounted, in parallel, to the pivotable mounting arrangement 14) are aligned. The driver's cab 6 also contains a lever (not shown) for controlling the steering of the rear wheels (separately to the steering of the front wheels). When the driver activates the hydraulic ram 16 so as to set the hinged elongate beam 10 in a desired position relative to the central axis X, the steering wheel 20 can be used to pivot the mounting arrangement 14, mounting the front wheels 2,3, relative to the elongate beam 10 so as to re-align the front wheels 2,3 in parallel with the rear wheels 4,5, and thus parallel to the direction of motion of the machine (which is parallel to the axis X).

As well as being mounted on pivot pin 15 which enables the mounting arrangement 14 to be pivoted relative to the elongate beam 10, the mounting arrangement 14 is also mounted on a swivel pin 22 which enables the front pair of wheels 2,3 to be pivoted up and downwards, in order to compensate for bumps or ruts in the ground being traversed.

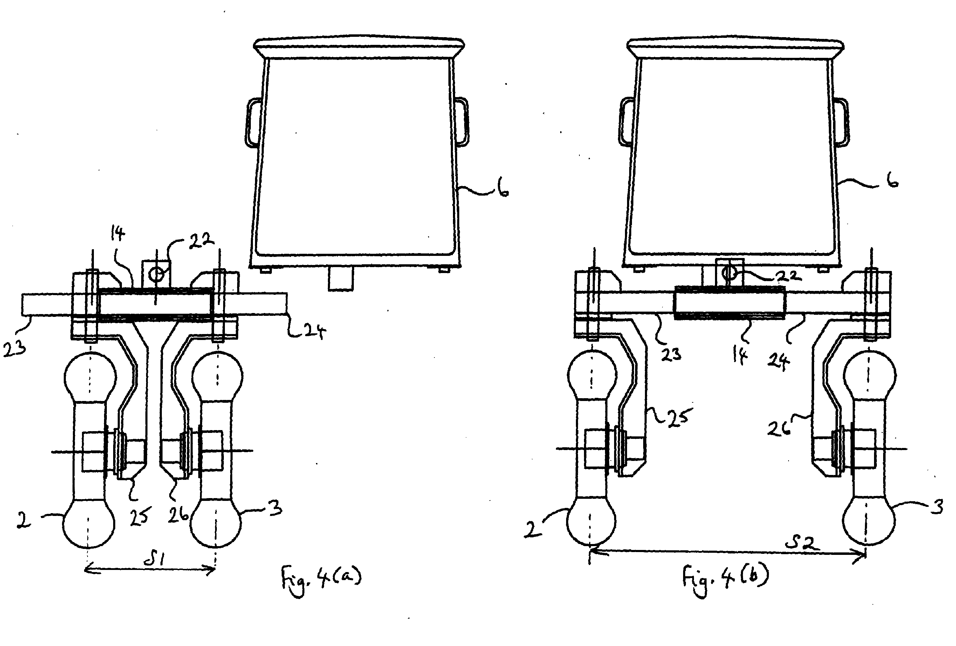

As evidenced by Figs. 2 & 3, and as further shown in Figs. 4(a) & (b), the track width of the two front wheels 2,3 can be adjusted by means of each of these wheels being carried on a respective telescopic arm 23,24 provided in the mounting arrangement 14. As shown clearly in Figs. 4(a) & 4(b), each of the axles of the front wheels 2,3 are suspended from the respective telescopic arm 23,24 via a bracket 25, 26. The telescopic arms 23,24 are also hydraulically controlled and can both be set at a fully contracted position, as shown in Fig. 2, in which the two front wheels 2,3 are spaced at a minimum distance (S1) apart, or can be extended therefrom to any position up to a fully extended position shown in Fig. 3, in which the two wheels 2,3 are set at a maximum distance (S2) apart. The rear wheels 4,5 are each also mounted on a respective telescopic arm (not shown) so that the track width of the rear wheels is also adjustable. The track width of the rear wheels can be set to equal the maximum track width S2 of the front wheels 2,3, as shown in Fig.3. As shown in Fig. 3, the maximum track width S2 of the front wheels is used when the elongate beam 10 is aligned with the longitudinal axis X of the chassis 1, so that the front wheels are aligned with rear wheels. This configuration would generally be used when the machine is to be driven on public roads, where it is desirable to have the front and rear wheels aligned in this manner, for maximum stability and manoeuvrability. In some cases, for example where the agricultural machine is being used for separating of stones from soil which is lifted from the ground by shears carried at the front of the machine (where the chassis forms part of a agricultural separator), it may also be desirable to carry out the separating process while the front wheels 2,3 are aligned with the rear wheels, in the manner of Fig. 3.

The minimum track width S1 of the front wheels 2,3 would generally be used where the elongate beam is swung to the left or right of the longitudinal axis X of the chassis 1, and in particular where the beam is swung to its maximum lateral displacement as shown in Fig. 2. By using a minimum track width of the two front wheels 2, 3 in such a configuration of the elongate beam 10, maximum stability can be achieved by ensuring that the front wheels 2, 3 are as close as possible to the centre of gravity of the machine.

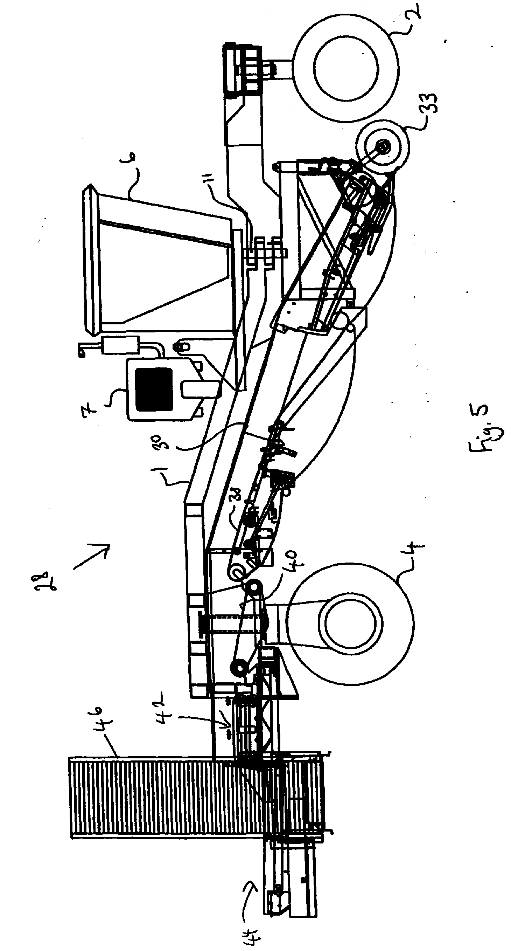

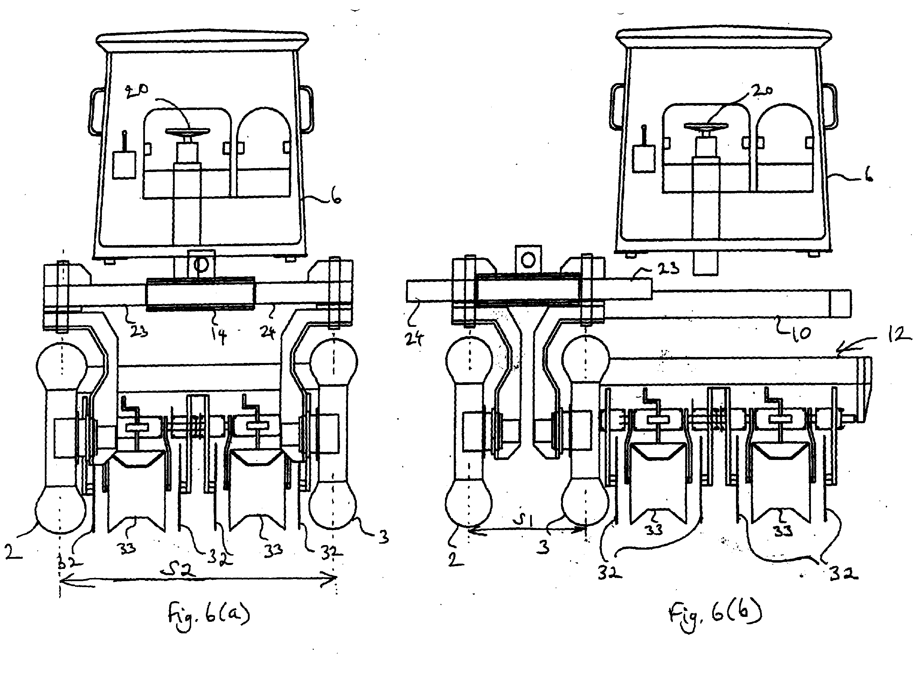

Fig. 5 shows the UTC of Fig. 1, where the machine incorporates a harvester, the various operational elements of the harvester being attached to the chassis 1, or attached to a sub-frame 30 connected to the main chassis 1. The harvester 28 incorporates harvesting shares 32 and diablo wheels 33 suspended from the sub frame 30, forward motion of the self-propelled chassis causing the shares to plough up the ground containing the crop to be harvested. The UTC in Fig.5 also incorporates an endless conveyor arrangement 38 (hereinafter referred to a "web" 38) for conveying the harvested crop upwardly into the main body of the UTC, the crop being transferred from this endless conveyor to a further feed conveyor 40 which feeds the crop to a tuber cleaning unit 42 from which the cleaned tubers exit onto a picking table 44 at the rear end of the UTC. From here the picked crop will be conveyed upwardly by an elevator 46 into a collection hopper which is commonly carried by a vehicle (not shown) travelling alongside the UTC 28. Figs. 6(a) & 6(b) are front views of the UTC 28 of Fig. 5, showing the positions of the pair of front wheels 2,3 relative to the driver's cab 6 and the harvesting shares and diablo rollers 32, 33. Fig. 6(a) shows the front wheels 2,3 at their maximum track width S2, when they are aligned with the rear wheels 4,5 of the UTC, and Fig 6(b) shows the front wheels 2,3 at their minimum track width S1 and displaced laterally to one side of the main chassis 1.

The working width of the UTC with harvester of Fig.5 (i.e. the width of the web 38) is preferably in the range of approximately 1.5 to 2.6 metres. Thus, it will be appreciated that the machine may be designed for two-row, or alternatively three-row, harvesting. (Other embodiments having other working widths are, though, also possible.)

It will be understood that a further advantage of the abovedescribed self-propelled machine is that as the front wheels 2,3 can be displaced by a significant lateral displacement to one side of the chassis 1 (as shown in Fig. 2) when the machine is traversing ground containing a crop to be harvested, there is no restriction on the width of the wheels 2,3 which can be used in the machine, since there is no need to limit the width of the wheels to a size which fits between the normal size of rows of, for example, potatoes which are to be harvested. This means that the front wheels 2,3 can be relatively broad. One advantage of being able to use relatively broad wheels is that greater stability of the machine can be achieved, particularly where the machine is being used in lifting applications, i.e. where crop is being lifted out of the ground. It will further be understood that a big advantage of being able to move the elongate beam 10 back in line with the longitudinal axis X when the machine is to be driven on public roads is that the machine can therefore be designed to have a maximum width which falls within the allowed maximum width set by the relevant road authorities, so that there is no need to have a dedicated escort when the machine is travelling on such public roads. Also, the UTC can be designed to incorporate a stone separator, or a planter, or any other equipment for carrying out operations where maximum stability, and/or equal traction on either side, of the machine are required. For such applications the elongate beam 10 would be aligned with the longitudinal axis X of the chassis. The same machine can also incorporate harvesting apparatus: when harvesting is to be carried out the front wheels 2,3 can be displaced to one side of the chassis (by pivoting the hinged beam 10) so as to avoid crop damage by the front wheels.

Also, the above-described machine is extremely flexible, allowing a user to choose to operate the machine with the elongate beam 10 at its maximum lateral displacement, or at any displacement to the left or right of the longitudinal axis X, or even aligned with the axis X, depending upon the conditions at the time. For example, depending on the loading system into which the harvested crop is to be loaded from the UTC of Fig.5 and/or depending on the conditions in the field during the harvesting operation (i.e. whether the soil is very wet, or dry), the user may wish to operate the machine with the front wheels aligned with the rear wheels. In other conditions the user may wish to operate the machine with the wheels displaced to one side so as to avoid running over crop to be harvested, in conditions where this would cause damage to the crop.

It will be appreciated that other modifications to the above-described embodiments are possible without departing from the scope of the invention. For example, the rear wheels could have a fixed (i.e. not adjustable) track width, if desired. The telescopic arms 23,24 for the front wheels could be designed so that the maximum track width of the front wheels 2,3 is less than, greater than, or equal to, the fixed track width of the rear wheels, as desired. In other embodiments, where the rear wheel track width is adjustable, the maximum rear wheel track width may be greater than, less than, or equal to the maximum track width of the front wheels, as desired.

Moreover, the UTC may be adapted to additionally, or alternatively, carry other types of tools than harvesting, stone separating or planting equipment. For example, the UTC may carry cultivating and/or spraying tools.

In a further possible variation of any of the above-described embodiments, instead of the front pair of wheels being pivotally mounted to the single elongate hinged beam 10, the front wheels could be mounted to a support structure of a different form. For example the front wheels could be mounted to a parallelogram support structure comprising four connected beams, which is hingedly connected to the chassis, with the front wheels disposed on opposite sides of a longitudinal axis of the support structure. The front wheels could be pivotally mounted to the parallelogram support in a similar manner to the pivotal mounting used to mount the front wheels to the elongate beam 10 in the UTC of Fig.1. Alternatively, a parallelogram support structure (comprising four beams, or three beams and using the chassis 1 as the fourth "side" of the parallelogram) could be provided with appropriate hinged joints so that, when pivoted relative to chassis, the front wheels are maintained parallel to the longitudinal axis X of the chassis (steering of the front wheels would still be provided to enable the driver of the UTC to turn the vehicle).

## Claims

1. A self-propelled universal tool carrier comprising: a chassis (1) for carrying at least one agricultural tool (28); a front pair of wheels (2,3) and a rear pair of wheels (4,5), on which the chassis (1) is mounted; and propulsion means (7) for driving the chassis (1) forward on said wheels(2-5), wherein the front pair of wheels (2,3) is mounted on a front wheel mounting support (10) extending from a front portion (12) of the chassis (1) and hinged (11) to the chassis (1) such that the front pair (2,3) is displaceable laterally to each side of a position in alignment with the longitudinal axis (X) of the chassis (1), the front wheel mounting support (10) being formed and arranged for mounting of said front pair of wheels (2,3) so that they can be maintained parallel to the longitudinal axis (X) of the chassis (1) when said front wheel mounting support (10) is laterally displaced, and wherein the two front wheels (2,3) are disposed on opposite sides of a longitudinal axis of the front wheel mounting support(10).

2. A universal tool carrier as claimed in claims 1 wherein the front pair of wheels (2,3) have an adjustable track width (S1).

3. A universal tool carrier as claimed in either of claims 1 or 2 wherein, said front wheel mounting support comprises an elongate beam (10) extending from a front portion (12) of the chassis (1) and hinged (11) on a substantially vertical axis which intersects the longitudinal axis (X) of the chassis (1).

4. A universal tool carrier as claimed in claim 3 wherein the front pair of wheels (2,3) is pivotally mounted on a pivotable mounting means (14,15) on the front wheel mounting support (10) for pivoting about a vertical axis so as to enable said front pair of wheels (2,3) to be maintained parallel to the longitudinal axis (X) of the chassis () when said pair of front wheels () is laterally displaced, said front wheels () being disposed on opposite sides of the elongate beam ().

5. A universal tool carrier as claimed in claim 2, or claim 3 or claim 4 when dependent on claim 2, wherein the track width of the front wheels (2,3) is adjustable from a narrow track width (S1) to a track width (S2) equal to the track width of the rear wheels (4,5) thereby to increase stability of the universal tool carrier.

6. A universal tool carrier as claimed in any one of claims 1 to 5 wherein the rear pair of wheels (4,5) has a fixed track width.

7. A universal tool carrier as claimed in any one of claims 1 to 5 wherein the rear pair of wheels (4,5) have adjustable track width.

8. A universal tool carrier as claimed in claim 3 or any one of claims 4 to 7 when dependent on claim 3 wherein the two front wheels (2,3) are mounted, in parallel relationship with respect to each other, to a free end () of the hinged beam () via said pivotable mounting means ().

9. A universal tool carrier as claimed in claim 3 or any one of claims 4 to 8 when dependent on claim 3 wherein the pivotable mounting means is in the form of a common mounting element (14) which is pivotally connected to the free end of the hinged beam (10).

10. A universal tool carrier as claimed in claim 9 wherein at least one of the two front wheels (2,3) is mounted on a respective extensible arm (23,24) forming part of said common mounting element(14).

11. A universal tool carrier as claimed in claim 10 wherein each said at least one extensible arm is in the form of a telescopic arm (24,25).

12. A universal tool carrier as claimed in claims 10 or 11 wherein each arm (24,25) is extensible to any position between a fully contracted state and a fully extended state.

13. A universal tool carrier as claimed in anyone of claims 1 to 12 wherein the rear wheels (4,5) are mounted on respective extensible arms.

14. A universal tool carrier as claimed in any one of claims 10 to 13 wherein said respective extensible arms are independently extensible.

15. A universal tool carrier as claimed in any one of claims 4 to 14 when dependent on claim 3 wherein the universal tool carrier further comprises control means (16) for setting the hinged elongate beam (10) in any desired position between and including two extreme positions in which the front pair of wheels (2,3) is at a maximum lateral displacement to either side of the longitudinal axis (X) of the chassis (1).

16. A universal tool carrier as claimed in claim 15 wherein the control means comprises hydraulic ram means (16) for setting the hinged beam (10) at a desired angle (y) relative to the longitudinal axis (X) of the chassis (1).

17. A universal tool carrier as claimed in claim 15 wherein said control means (16) is provided with mechanical locking means provided for locking the hinged beam (10) in a desired position.

18. A universal tool carrier as claimed in any one of claims 1 to 17 wherein the universal tool carrier incorporates harvesting machinery (28) suitable for harvesting tubers.

19. A universal tool carrier as claimed in claim 18 wherein the universal tool carrier additionally carries stone and/or tuber separating machinery and/or grading machinery mounted to the chassis (1), or otherwise incorporated therein.
